# EUROPÄISCHE PATENTSCHRIFT

(11) **EP 2 441 708 B1**
(45) Veröffentlichungstag und Bekanntmachung des Hinweises auf die Patenterteilung: **20.04.2016**
(21) Anmeldenummer: 11179350.1
(22) Anmeldetag: 30.08.2011
(51) Int. Cl.: B65G 47/256

(54) **Vorrichtung zum Ausrichten von Gegenständen**
Device for aligning objects
Dispositif d'alignement d'objets

(30) Priorität: 12.10.2010 DE 102010042333
(43) Veröffentlichungstag der Anmeldung: 18.04.2012
(60) Teilanmeldung: 12171329.1
(73) Patentinhaber: Krones AG, 93073 Neutraubling (DE)
(72) Erfinder: Seidl, Andreas, 93093 Donaustauf (DE)
(74) Vertreter: Grünecker Patent- und Rechtsanwälte PartG mbB

(56) Entgegenhaltungen:
- EP-A1- 1 650 143
- EP-A2- 1 325 877
- EP-A2- 1 950 153
- AT-A1- 506 149
- US-A- 5 236 077
- US-B1- 7 322 458

## Beschreibung

Die Erfindung bezieht sich auf eine Vorrichtung und ein Verfahren zum Ausrichten von Gegenständen, insbesondere von Vorformlingen zur Herstellung von Kunststoffbehältern der in den Oberbegriffen der Ansprüche 1 und 9 beschriebenen Art.

Eine Vorrichtung und ein Verfahren dieser Art sind aus der EP 1 335 870 bekannt. Derartige Ausrichtvorrichtungen dienen dazu, die in einer Blasmaschine oder anderen geeigneten Vorrichtungen hergestellten Gegenstände bzw. Vorformlinge in eine bestimmte Ausrichtung zu bringen, um diese dann in dieser ausgerichteten Stellung nachfolgenden Anlagen zur Weiterbearbeitung zuzuführen. Diese Ausrichtvorrichtungen enthalten eine Ausrichtstrecke, auf der den Vorformlingen bzw. Gegenständen Gelegenheit gegeben wird, sich in eine bestimmte Ausrichtung selbst zu orientieren, gegebenenfalls unterstützt durch mechanische Einwirkungen und die Einwirkung von Schwerkraft. Das Problem bei diesen Ausrichtstrecken liegt jedoch darin, dass es nicht immer gelingt, alle der aufgegebenen Vorformlinge in die gewünschte Ausrichtung zu bringen. Die bekannte Ausrichtstrecke enthält deshalb eine Ausschleuseinrichtung, durch die nicht-ausgerichtete Vorformlinge aus dem Förderstrom entfernt werden. Da die mangelnde Ausrichtung in den überwiegenden Fällen nicht auf Qualitätsmängel der Vorformlige zurückzuführen ist, werden die ausgeschleusten Vorformlinge anschließend für einen erneuten Durchlauf der Ausrichtstrecke rückgeführt. Die bekannte Vorrichtung enthält eine Ausschleuseinrichtung, die einen Schacht enthält, in den die nicht-ausgerichteten Vorformlinge ausgeschleust werden. Der Schacht endet über einem Rückförderband, der die Vorformlinge zurück in einen Sammelbehälter fördert, der von der vorangegangenen Herstellungsmaschine der Vorformlinge, gefüllt wird. Aus diesem Vorratsbehälter fördert ein Zufuhrförderer die Vorformlinge zur Eingangsseite der Ausrichtstrecke, wo rückgeförderte Vorformlinge und neu hergestellte Vorformlinge durch den gleichen Förderer gemeinsam auf die Ausrichtstrecke aufgebracht werden. Es ist jedoch in der Praxis oft so, dass die Herstellungsmaschinen oder Vorratsbehälter der Vorformlinge örtlich weit entfernt von der Ausrichtstrecke aufgestellt werden müssen, so dass sich lange Förderwege für die Rückführung ergaben.

Aus der US 7 322 458 B1 ist eine gattungsmäßige Vorrichtung zum Orientieren und zur Zuführung von Vorformlingen bekannt.

Der Erfindung liegt die Aufgabe zu Grunde, eine Vorrichtung und ein Verfahren bereitzustellen, das eine konstruktiv wenig aufwendige Rückführung nicht-ausgerichteter Vorformlinge gestattet, und zwar unabhängig vom räumlichen Abstand zwischen der Ausrichtstrecke und der vorangegangenen Herstellungsmaschine oder dem Vorratsbehälter.

Die Aufgabe wird durch die in den Ansprüchen 1 oder 9 angegebenen Merkmale gelöst.

Durch die erfindungsgemäße Ausgestaltung wird die Rückführung von der Zuführung der neuen Vorformlinge, die die Ausrichtstrecke noch nicht durchlaufen haben, abgekoppelt, und die nicht-ausgerichteten, ausgeschleusten Vorformlinge direkt der Eingangsseite der Ausrichtstrecke zugeführt. Auf diese Weise erfolgt die Rückführung im Wesentlichen lediglich über die Länge der Ausrichtstrecke, so dass die Vorrichtung konstruktiv vereinfacht werden kann. Aber auch verfahrenstechnische Vorteile sind gegeben, da ausgeschleuste Vorformlinge die Eingangsseite der Ausrichtstrecke sehr schnell erreichen, so dass beispielsweise beim Abschalten der Maschine oder beim Wechsel der auszurichtenden Vorformlinge nicht erst gewartet werden muss, bis alle ausgeschleusten Vorformlinge den gesamten Weg bis zur Herstellungsmaschine bzw. bis zu deren Vorratsbehälter zurückgelegt haben.

Dadurch, dass die Ausschleuseinrichtung einen Sammelbehälter aufweist, erfolgt eine Rückführung erst dann, wenn eine ausreichende Anzahl oder Menge ausgeschleuster Vorformlinge vorhanden ist. Damit wird eine definierte Menge bereitgestellt, was in Verbindung mit der Steuerung des Zufuhrförderers immer eine konstante Beschickung der Ausrichtstrecke mit Vorformlingen in vorzugsweiser linearer Abhängigkeit zur Maschinenleistung gewährleistet.

Zum Aufnehmen der beiden Ausgangsseiten des Zufuhrförderers und des Rückförderers enthält die Eingangsseite der Ausrichtstrecke einen Fördertrichter, um ein kontrolliertes Aufgeben der Vorformlinge zu erreichen.

Wenn die erfindungsgemäße Vorrichtung mit voller Kapazität läuft, d.h. der Zufuhrförderer genau so viele Vorformlinge pro Zeiteinheit anfördert, wie von der Ausrichtstrecke bewältigt werden kann, so ist ein Signalgeber vorgesehen, der die Anwesenheit von aus dem Rückfuhrförderer stammenden Vorformlingen im Bereich der Eingangsseite der Ausrichtstrecke feststellt und die Durchsatzleistung (Geschwindigkeit/Zahl der Vorformlinge) des Zufuhrförderers entsprechend der angeförderten Menge an rückgeführten Vorformlingen reduziert.

Alternativ ist ein Signalgeber im Bereich des Sammelbehälters der Ausschleuseinrichtung vorgesehen, der den Rückführförderer steuert, so dass dieser erst dann in Betrieb gesetzt werden muss, wenn sich eine ausreichende Anzahl nicht-ausgerichteter Vormformlinge im Sammelbehälter befindet.

Vorteilhafte Weiterbildungen der Erfindung sind den Unteransprüchen zu entnehmen.

Die erfindungsgemäße Vorrichtung bietet den weiteren Vorteil, dass angeförderte Vorformlinge der Ausrichtstrecke vor der Ausschleuseinrichtung entnommen werden können. Dies ist besonders zweckmäßig beim Wechsel von Vorformlingen (andere Form, andere Größe oder dergleichen), da auf diese Weise nicht gewartet werden muss, bis die gesamte Ausrichtstrecke einschließlich der Rückführung leergelaufen ist. Diese Möglichkeit kann jedoch auch bei Vorrichtungen zum Ausrichten von Gegenständen eingesetzt werden, bei denen der Rückführförderer nicht direkt mit der Eingangsseite der Ausrichtstrecke verbunden ist.

Die Entnahmeeinrichtung wirkt besonders effektiv, wenn sie im Bereich zwischen dem Zufuhrförderer und der Ausrichtstrecke vorgesehen ist und eine Weiche enthält, mit der der ankommende Strom der Vorformlinge umgeleitet und beispielsweise in einen Aufnahmebehälter eingeleitet wird.

Auf konstruktiv einfache Weise ist die Weiche als umstellbarer Boden eines Fördertrichters ausgebildet.

Ein Ausführungsbeispiel der Erfindung wird nachfolgend anhand der Zeichnungen näher erläutert. Es zeigen:
- Fig. 1: eine Vorderansicht einer erfindungsgemäßen Vorrichtung,
- Fig. 2: dir Rückseite der Vorrichtung gemäß Figur 1, und
- Fig. 3: eine vergrößerte Schnittdarstellung III-III aus Figur 2.

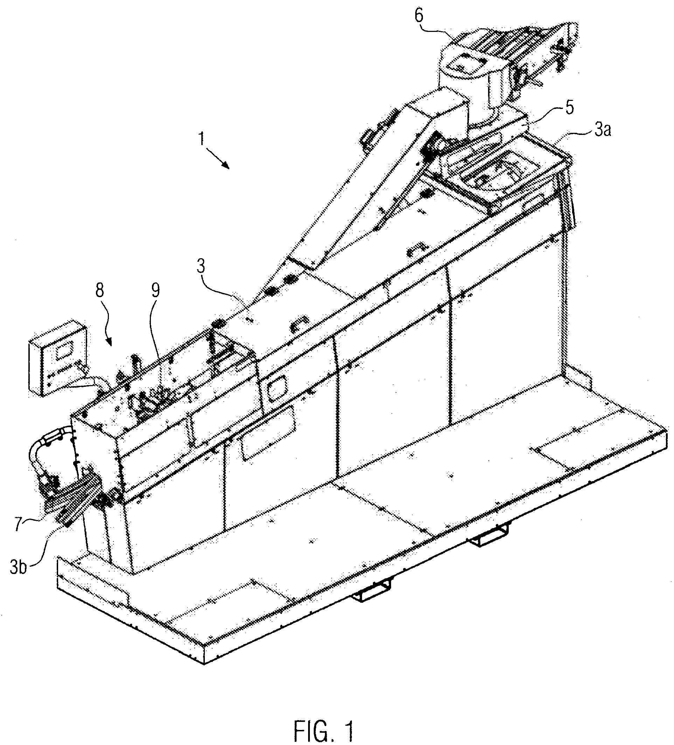

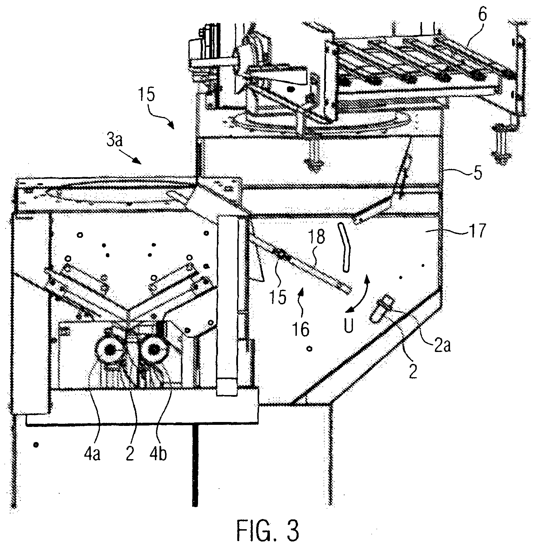

Die Figuren 1 bis 3 zeigen in unterschiedlichen Darstellungen eine Vorrichtung 1 zum Ausrichten von Gegenständen, die im vorliegenden Ausführungsbeispiel Vorformlinge 2 (Figur 3) sind, wie sie bei der Herstellung von Kunststoffbehältern, wie beispielsweise Kunststoffflaschen, als sogenannte "Preforms" bereitgestellt und einer Blasmaschine zugeführt werden, die aus den Vorformlingen 2 Behälter, wie beispielsweise Kunststoffflaschen, fertigt. Die Prinzipien der vorliegenden Anmeldung sind jedoch auch bei der Handhabung anderer Gegenstände einsetzbar.

Die Vorrichtung 1 enthält eine Ausrichtstrecke 3, die von herkömmlicher Konstruktion und an die sortierenden Gegenstände angepasst ist, und die beispielsweise zum Sortieren von Vorformlingen 2 als Rollensortierer bekannter Art ausgebildet sind. Rollensortierer enthalten zwei Walzen bzw. Walzenreihen 4a, 4b, die sich in einen axialen Abstand gegenüberliegen, in der der zu sortierende Vorformling 2 nur in einer bestimmten Ausrichtung eintreten kann, und in der er beispielsweise durch den üblicherweise bei Vorformlingen vorhandenen Halsbund 2a gegen ein Durchrutschen gesichert wird.

Die Ausrichtstrecke 3 verläuft zwischen ihrer Eingangsseite 3a und ihrer Ausgangsseite 3b schräg abwärts, so dass eine Schwerkraftunterstützung für das Ausrichten und das Fördern der Vorformlinge 2 gegeben ist. An der Eingangsseite 3a befindet sich ein Fördertrichter 5, in den die auf einem Zufuhrförderer 6 ankommenden Vorformlinge 2 in die Ausrichtstrecke 3 eingebracht werden. Der Zufuhrförderer 6 verbindet bevorzugt eine Herstellungsvorrichtung für Vorformlinge direkt mit der Eingangsseite 3a der Ausrichtstrecke 3; es ist jedoch auch möglich, die Vorformlinge mit Hilfe des Zufuhrförderers 6 aus einem Vorrat heranzubringen.

Die vom Zufuhrförderer 6 herangebrachten Vorformlinge 2 gelangen über den Trichter 5 in die Ausrichtstrecke 3 und werden dort in der oben skizzierten Weise ausgerichtet und verlassen die Ausgangsseite 3b der Ausrichtstrecke 3 über einen Förderer 7, der sie zur Weiterverarbeitung, d.h. insbesondere in eine Blasmaschine, bringt.

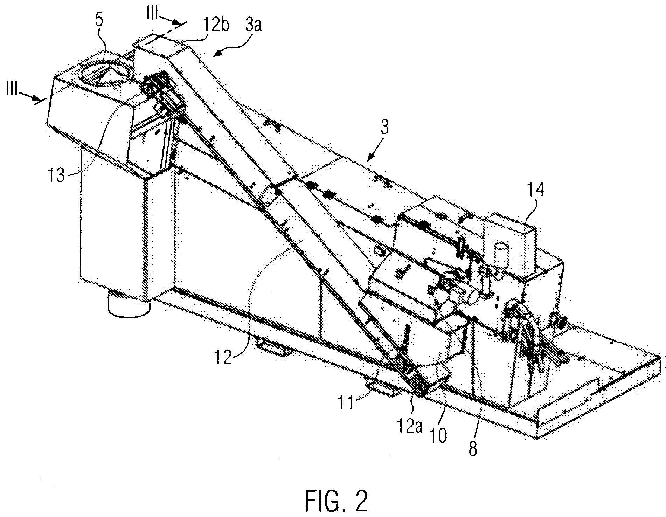

An der Ausgangsseite 3b der Ausrichtstrecke 3 ist eine Ausschleuseinrichtung 8 vorgesehen. Die Ausschleuseinrichtung 8 enthält bevorzugt eine Ausblaseinrichtung sowie andere Einrichtungen, die zum Entfernen von nicht-ausgerichteten Vorformlingen aus dem Förderstrom der ausgerichteten Vorformlingen geeignet ist. Im dargestellten Ausführungsbeispiel ist eine Abstreifeinrichtung 9 in Form eines sogenannten "Kickerrades" dargestellt, mit dessen Hilfe ineinandersteckende oder sonst wie aneinander haftende Vorformlinge getrennt werden können. Die nicht-ausgerichteten Vorformlinge, die sich auf den Strom der ausgerichteten Vorformlingen ablagern, werden dann durch die Ausblaseinrichtung 8 in einen in Figur 2 dargestellten Sammelbehälter 10 geblasen. Dort werden sie zunächst gesammelt, bis eine vorbestimmte Anzahl an Vorformlingen im Behälter 10 angesammelt ist. Es ist bevorzugt ein Signalgeber 11 vorgesehen, der ein Signal erzeugt, wenn diese vorbestimmte Anzahl oder Menge erreicht ist. Der Signalgeber 11 ist bevorzugt eine Lichtschranke, kann jedoch auch irgendeine Zähleinrichtung sein, die die ausgeblasenen Vorformlinge zählt oder kann auf andere Weise dem gewünschten Zweck dienen.

Die Ausschleuseinrichtung 8 ist mit einem Rückförderer 12 verbunden, dessen Eingangsseite 12a an der Unterseite des Sammelbehälters 10 und einer dort vorgesehenen Auslassöffnung beginnt. Der Rückförderer 12 führt von Ausschleuseinrichtung 8 schräg nach oben direkt zur Eingangsseite 3a der Ausschleusstrecke und mündet mit seiner Ausgangsseite 12b bevorzugt dort ebenfalls in den Fördertrichter 5. Auf diese Weise kommen die nicht-ausgerichteten und demzufolge ausgeschleusten Vorformlinge und die durch den Zufuhrförderer 6 herangebrachten Vorformlinge zusammen und gemischt in die Ausrichtstrecke 3 hinein.

Dem Rückförderer 12 ist ein weiterer Signalgeber 13, wiederum bevorzugt eine Lichtschranke, zugeordnet, mit dem festgestellt werden kann, ob sich im Rückführförderer 12 Vorformlinge 2 befinden.

Die Signalgeber 11, 13 sind mit einer Steuerung 14 verbunden, durch die die gesamte Vorrichtung 1 gesteuert werden kann.

Durch den weiteren Signalgeber 13 werden Probleme bei einer vollständigen Auslastung der Ausrichteinrichtung 3 vermieden, wobei bei dieser Auslastung die Zahl der vom Zufuhrförderer 6 herangebrachten Vorformlinge im Wesentlichen der Anzahl der Vorformlinge entspricht, die von der Ausrichteinrichtung 3 verarbeitet werden kann. Durch den weiteren Sensor 13 kann die Anwesenheit von aus dem Rückführförderer 12 stammenden Vorformlinge im Bereich der Eingangsseite 3a, insbesondere im Bereich des Zufuhrtrichters 5 festgestellt werden. Gemäß dem Signal dieses Signalgebers 13 können dann die Geschwindigkeiten des Zufuhrförderers 6 und/oder des Rückführförderers 12 so aneinander angepasst werden, dass die maximale Kapazität der Ausrichtstrecke 3 nicht überschritten wird. Der einfachste Weg dieser Steuerung liegt beispielsweise darin, die Geschwindigkeit des Zufuhrförderers 6 zu drosseln, sobald der Signalgeber 13 die Anwesenheit zusätzlicher Vorformlinge signalisiert. Vorzugsweise wird der Zufuhrförderer 6 genau um die Fördermenge verlangsamt, welche durch den Rückführförderer 12 bereitgestellt wird.

Es ist jedoch auch möglich, für eine derartige Steuerung die Signale des ersten Signalgebers 11 zu verwenden, wenn die Geschwindigkeit des Rückführförderers 12 und die Anzahl der sich im Sammelbehälter 10 befindenden Vorformlinge bekannt ist.

Die Signale der Signalgeber 11 und 13 werden zu diesem Zweck an die Steuervorrichtung 14 übertragen, die gleichzeitig die Gesamtsteuerung der erfindungsgemäßen Vorrichtung 1 übernimmt und beispielsweise auf eine Anpassung an unterschiedlich geformte Vorformlinge oder Vorformlinge unterschiedlicher Dimension bewirken kann.

Wie insbesondere in Figur 3 dargestellt, ist weiterhin eine Entnahmevorrichtung 15 vorgesehen, durch die ankommende Vorformlinge 2 vorzeitig aus der Vorrichtung 1 entfernt werden können, so dass die Zeiten, die für das Umstellen von einer Art Vorformling auf eine weitere Art Vorformling benötigte Zeit reduzieren, da die Vorformlinge nicht mehr das gesamte System durchlaufen müssen. Die Einrichtung 15 ist von besonderem Vorteil mit der erfindungsgemäßen Vorrichtung einsetzbar, sie ist jedoch auch für Ausrichtstrecken mit herkömmlicher Rückführung brauchbar.

Die Entnahmeeinrichtung 15 befindet sich bevorzugt zwischen dem Zufuhrförderer 6 und der Eingabeseite 3a der Ausrichtstrecke 3, und ist im dargestellten Ausführungsbeispiel in der Art einer Weiche 16 ausgebildet, die wahlweise die Vorformlinge vom Zufuhrförderer 6 in die Ausrichtstrecke 3 bzw. vom Zufuhrförderer 6 in eine Auffangeinrichtung 17 leitet. Die Auffangeinrichtung 17 kann ein Förderer oder, wie dargestellt, ein Aufnahmebehälter sein. Die Weiche 16 enthält eine umstellbare Rutsche 18, die über eine horizontale, im Wesentlichen in der Mitte der Rutsche 18 angeordnete Schwenkachse 19 in Richtung des Doppelpfeils des U verschwenkbar ist.

In der in Figur 3 gezeigten Stellung steht die Rutsche 18 in einer Stellung, in der die Vorformlinge 2 in den Aufnahmebehälter geleitet werden, während der Eingang zur Ausrichtstrecke 3 gesperrt ist. Beim Umstellen der Weiche 16 bildet die Rutsche 18 hingegen den Boden des Fördertrichters 5, sperrt den Eingang zum Aufnahmebehälter 17 und gibt den Eingang zur Ausrichtstrecke 3 frei. Zweckmäßigerweise sind Arretierungseinrichtungen (nicht gezeichnet) vorgesehen, um die Weiche 16 in ihren jeweiligen Stellungen zu arretieren. Ebenso können sogenannte Freiraumüberwachungslichtschranken ein störungsfreies Umschalten sicherstellen.

In Abwandlung des beschriebenen und gezeichneten Ausführungsbeispiels können die konstruktiven Gegebenheiten der Vorrichtung an die Eigenarten der zu handhabenden Gegenstände angepasst werden. Statt eines Rollensortierers können beispielsweise andere Sortierkonstruktionen eingesetzt werden. Der Rückförderer kann Gurtbänder oder andere Förderer enthalten. Auch die Signalgeber können andere, geeignete Sensoren umfassen. Darüber hinaus können die beschriebenen Funktionen der Überwachung der Anwesenheit und der Förderbewegung der rückgeführten Behälter durch jeden der Signalgeber allein oder durch beide Signalgeber gemeinsam ausgeführt werden.

## Patentansprüche

1. Vorrichtung (1) zum Ausrichten von Vorformlingen (2) zur Herstellung von Kunststoffbehältern, mit einer Ausrichtstrecke (3), auf deren Eingangsseite (3a) über einen Zufuhrförderer (6) die Vorformlinge (2) ungerichtet aufgegeben werden, und mit einer Ausschleuseinrichtung (8) und einem Rückführförderer (12) zum Ausschleusen und Rückführen nicht-ausgerichteter Vorformlinge (2), wobei der Rückführförderer (12) die Ausschleuseinrichtung (8) direkt mit der Eingangsseite (3a) der Ausrichtstrecke verbindet, **dadurch gekennzeichnet, dass** die Ausschleuseinrichtung (8) einen Sammelbehälter (10) für ausgeschleuste Vorformlinge (2) aufweist, der mit der Eingangsseite (12a) des Rückförderers (12) verbunden ist, dass der Eingangsseite (3a) der Ausrichtstrecke (3) ein Fördertrichter (5) zugeordnet ist, dass wenigstens ein Signalgeber (11, 13) vorgesehen ist, der die Anwesenheit von aus dem Rückführförderer (12) stammenden Vorformlingen (2) im Bereich der Eingangsseite (3a) der Ausrichtstrecke (3) feststellt oder der die Anwesenheit von ausgeschleusten Vorformlingen (2) im Bereich des Sammelbehälters (10) feststellt.

2. Vorrichtung nach Anspruch 1, **dadurch gekennzeichnet, dass** in den Fördertrichter (5) die Ausgangsseite (12b) des Rückförderers (12) und der Zufuhrförderer (6) einmünden.

3. Vorrichtung nach Anspruch 1, **dadurch gekennzeichnet, dass** eine Steuereinrichtung (14) vorgesehen ist, die die Fördergeschwindigkeit des Zufuhrförderers (6) in Abhängigkeit von einem Signal des wenigstens einen Signalgebers (11, 13) steuert.

4. Vorrichtung nach Anspruch 1, **dadurch gekennzeichnet, dass** eine Steuereinrichtung (14) vorgesehen ist, die den Rückführförderer (12) in Abhängigkeit von einem Signal des wenigstens einen Signalgebers (11, 13) steuert.

5. Vorrichtung, insbesondere nach einem der Ansprüche 1 bis 4, **dadurch gekennzeichnet, dass** in Förderrichtung vor der Ausschleuseinrichtung (8) eine Entnahmeeinrichtung (15) für auf dem Zufuhrförderer (6) angeförderten Vorformlinge (2) vorgesehen ist.

6. Vorrichtung nach Anspruch 5, **dadurch gekennzeichnet, dass** die Entnahmeeinrichtung (15) eine zwischen dem Zufuhrförderer (6) und der Ausrichtstrecke (3) angeordnete Weiche (16) enthält, die den Zufuhrförderer (6) wahlweise mit der Ausrichtstrecke (3) oder einer Auffangeinrichtung (17) verbindet.

7. Vorrichtung nach Anspruch 6, **dadurch gekennzeichnet, dass** die Auffangeinrichtung (17) einen im Bereich der Eingangsseite (3a) der Ausrichteinrichtung (3) angeordneten Aufnahmebehälter enthält.

8. Vorrichtung nach Anspruch 5 oder 6, **dadurch gekennzeichnet, dass** die Weiche (16) einen umstellbaren Boden eines Fördertrichters (5) enthält, in den der Zufuhrförderer (6) und der Rückführförderer (12) münden.

9. Verfahren zum Ausrichten von Vorformlingen (2) zur Herstellung von Kunststoffbehältern, mit einer Ausrichtstrecke (3), auf deren Eingangsseite (3a) über einen Zufuhrförderer (6) die Vorformlinge (2) ungerichtet aufgegeben werden, und nicht-ausgerichtete Vorformlinge (2) mit einer Ausschleuseinrichtung (8) ausgeschleust und mit einem Rückführförderer (12) rückgeführt werden, **dadurch gekennzeichnet, dass** die ausgeschleusten Vorformlinge (2) vor dem Rückführen in einem Sammelbehälter (10) gesammelt werden, dass die Vorformlinge (2) direkt über einen der Eingangsseite der Ausrichtstrecke (3) zugeordneten Fördertrichter (5) auf die Ausrichtstrecke (3) zurückgeführt werden, wobei mit wenigstens einem Signalgeber (11, 13) die Anwesenheit von aus dem Rückführförderer (12) stammenden Vorformlingen (2) im Bereich der Eingangsseite (3a) der Ausrichtstrecke (3) oder von ausgeschleusten Vorformlingen (2) im Bereich des Sammelbehälters (10) festgestellt wird.

10. Verfahren nach Anspruch 9, **dadurch gekennzeichnet, dass** die Geschwindigkeit des Zufuhrförderers (6) auf die Zahl und/oder die Geschwindigkeit der rückgeförderten Vorformlinge (2) angepasst wird.

## Claims

1. Device (1) for orienting preforms (2) for the manufacture of plastic containers, with an orientation section (3) on the entry side (3a) of which the preforms (2) are charged in a non-oriented manner by a feeding conveyor (6), and with a discharge means (8) and a return conveyor (12) for discharging and returning non-oriented preforms (2), wherein the return conveyor (12) directly connects the discharge means (8) with the entry side (3a) of the orientation section, **characterized in that** the discharge means (8) comprises a collecting vessel (10) for discharged preforms (2) which is connected with the entry side (12a) of the return conveyor (12), that a feed hopper (5) is associated to the entry side (3a) of the orientation section (3), that at least one signal transmitter (11, 13) is provided which detects the presence of preforms (2) coming from the return conveyor (12) in the region of the entry side (3a) of the orientation section (3) or which detects the presence of discharged preforms (2) in the region of the collecting vessel (10).

2. Device according to claim 1, **characterized in that** the outlet side (12b) of the return conveyor (12) and the feeding conveyor (6) end in the feed hopper (5).

3. Device according to claim 1, **characterized in that** a controlling system (14) is provided which controls the feed rate of the feeding conveyor (6) depending on a signal of the at least one signal transmitter (11, 13).

4. Device according to claim 1, **characterized in that** a controlling system (14) is provided which controls the return conveyor (12) depending on a signal of the at least one signal transmitter (11, 13).

5. Device, in particular according to one of claims 1 to 4, **characterized in that** in the direction of feed upstream of the discharge means (8), a withdrawal means (15) for preforms (2) supplied on the feeding conveyor (6) is provided.

6. Device according to claim 5, **characterized in that** the withdrawal means (15) contains a distributing guide (16) arranged between the feeding conveyor (6) and the orientation section (3) which connects the feeding conveyor (6) selectively with the orientation section (3) or with a collecting means (17).

7. Device according to claim 6, **characterized in that** the collecting device (17) contains a receptacle arranged in the region of the entry side (3a) of the orientation means (3).

8. Device according to claim 5 or 6, **characterized in that** the distributing guide (16) contains an adjustable bottom of a feed hopper (5) into which the feeding conveyor (6) and the return conveyor (12) end.

9. Method for orienting preforms (2) for the manufacture of plastic containers, with an orientation section (3) on the entry side (3a) of which the preforms (2) are charged in a non-oriented manner via a feeding conveyor (6), and non-oriented preforms (2) are discharged with a discharge means (8) and returned with a return conveyor (12), **characterized in that** discharged preforms (2) are collected in a collecting vessel (10) before they are returned, that the preforms (2) are directly returned to the orientation section (3) via a feed hopper (5) being associated to the entry side (3a) of the orientation section (3), wherein the presence of preforms (2) coming from the return conveyor (12) in the region of the entry side (3a) of the orientation section (3) or of discharged preforms (2) in the region of the collecting vessel (10) is detected with at least one signal transmitter (11, 13).

10. Method according to claim 9, **characterized in that** the speed of the feeding conveyor (6) is adapted to the number and/or speed of the returned preforms (2).

## Revendications

1. Dispositif (1) pour l'orientation et l'alignement de préformes (2) destinées à la fabrication de récipients ou contenants en matière plastique, comprenant un parcours d'orientation et d'alignement (3) au côté d'entrée (3a) duquel sont fournies, par l'intermédiaire d'un transporteur d'alimentation (6), les préformes (2) de manière non orientée ni alignée, et comprenant un dispositif d'éjection (8) et un transporteur de retour (12) pour l'éjection et le retour et recyclage des préformes (2) non orientées et non alignées, le transporteur de retour (12) reliant le dispositif d'éjection (8) directement au côté d'entrée (3a) du parcours d'orientation et d'alignement, **caractérisé en ce que** le dispositif d'éjection (8) comprend un bac de collecte (10) pour des préformes (2) éjectées, qui est relié au côté d'entrée (12a) du transporteur de retour (12), **en ce qu'**au côté d'entrée (3a) du parcours d'orientation et d'alignement (3) est associée une trémie de transport (5), et **en ce qu'**il est prévu au moins un capteur de signal (11, 13), qui détecte la présence de préformes (2) en provenance du transporteur de retour (12) dans la zone du côté d'entrée (3a) du parcours d'orientation et d'alignement (3), ou détecte la présence de préformes (2) ayant été éjectées, dans la zone du bac de collecte (10).

2. Dispositif selon la revendication 1, **caractérisé en ce que** dans la trémie de transport (5) débouchent le côté de sortie (12b) du transporteur de retour (12) et le transporteur d'alimentation (6).

3. Dispositif selon la revendication 1, **caractérisé en ce qu'**il est prévu un dispositif de commande (14), qui commande la vitesse de transport du transporteur d'alimentation (6) en fonction d'un signal dudit au moins un capteur de signal (11, 13).

4. Dispositif selon la revendication 1, **caractérisé en ce qu'**il est prévu un dispositif de commande (14), qui commande le transporteur de retour (12) en fonction d'un signal dudit au moins un capteur de signal (11, 13).

5. Dispositif, notamment selon l'une des revendications 1 à 4, **caractérisé en ce qu'**avant le dispositif d'éjection (8) en se référant à la direction de transport, il est prévu un dispositif de prélèvement (15) pour des préformes (2) amenées sur le transporteur d'alimentation (6).

6. Dispositif selon la revendication 5, **caractérisé en ce que** le dispositif de prélèvement (15) renferme un aiguillage (16), qui est agencé entre le transporteur d'alimentation (6) et le parcours d'orientation et d'alignement (3), et qui relie le transporteur d'alimentation (6) sélectivement au parcours d'orientation et d'alignement (3) ou à un dispositif de réception (17).

7. Dispositif selon la revendication 6, **caractérisé en ce que** le dispositif de réception (17) comprend un récipient ou conteneur d'accueil agencé dans la zone du côté d'entrée (3a) du dispositif d'orientation et d'alignement (3).

8. Dispositif selon la revendication 5 ou la revendication 6, **caractérisé en ce que** l'aiguillage (16) comprend un fond à position inversable d'une trémie de transport (5) dans laquelle débouchent le transporteur d'alimentation (6) et le transporteur de retour (12).

9. Procédé pour orienter et aligner des préformes (2) destinées à la fabrication de récipients ou contenants en matière plastique, avec un parcours d'orientation et d'alignement (3) au côté d'entrée (3a) duquel sont fournies, par l'intermédiaire d'un transporteur d'alimentation (6), les préformes (2) de manière non orientée ni alignée, et des préformes (2) non orientées ni alignées sont éjectées à l'aide d'un dispositif d'éjection (8) et sont ramenées et recyclées au moyen d'un transporteur de retour (12), **caractérisé en ce que** les préformes (2) ayant été éjectées sont collectées dans un bac de collecte (10) avant le retour, **en ce que** les préformes (2) sont recyclées directement sur le parcours d'orientation et d'alignement (3) par l'intermédiaire d'une trémie de transport (5) associée au côté d'entrée du parcours d'orientation et d'alignement (3), et **en ce qu'**à l'aide d'au moins un capteur de signal (11, 13), on détecte la présence de préformes (2) en provenance du transporteur de retour (12) dans la zone du côté d'entrée (3a) du parcours d'orientation et d'alignement (3), ou de préformes (2) ayant été éjectées, dans la zone du bac de collecte (10).

10. Procédé selon la revendication 9, **caractérisé en ce que** l'on adapte la vitesse du transporteur d'alimentation (6) au nombre et/ou à la vitesse des préformes (2) ayant été ramenées pour le recyclage.
